## Europäisches Patentamt
## European Patent Office
## Office européen des brevets

(19)

(11) Numéro de publication: **0 052 021**
**B1**

(12) # FASCICULE DE BREVET EUROPEEN

(45) Date de publication du fascicule du brevet:
**23.01.85**

(51) Int. Cl.⁴: **B 65 D 5/56**

(21) Numéro de dépôt: **81401389.2**

(22) Date de dépôt: **07.09.81**

(54) Contenant en carton plié revêtu d'une pellicule en matière synthétique et muni d'un cadre périphérique en une seule pièce ainsi que son procédé de fabrication.

(30) Priorité: **07.11.80 FR 8023782**

(43) Date de publication de la demande:
**19.05.82 Bulletin 82/20**

(45) Mention de la délivrance du brevet:
**23.01.85 Bulletin 85/4**

(84) Etats contractants désignés:
**AT BE CH DE GB IT LI LU NL SE**

(56) Documents cités:
**DE - A - 1 486 954**
**DE - A - 2 036 082**
**FR - A - 2 197 776**
**FR - A - 2 211 927**
**FR - A - 2 404 566**
**FR - A - 2 404 567**
**FR - A - 2 406 522**
**US - A - 3 927 821**

(73) Titulaire: **SOCIETE PARISIENNE D'IMPRESSION ET DE CARTONNAGE, 41, avenue de l'Agent Sarre, F-92700 Colombes (FR)**
Titulaire: **BODET, Jean, Augustin, 42, Avenue du Maréchal Douglas Haig, F-78000 Versailles (Yvelines) (FR)**

(72) Inventeur: **Chazal, Guy, 5, rue du 11 Novembre, Sannois (Val d'Oise) (FR)**
Inventeur: **Bodet, Jean Augustin, 42, Av. du Maréchal Douglas Haig, Versailles (Yvelines) (FR)**

(74) Mandataire: **Rataboul, Michel, Cabinet Michel Rataboul 69, rue de Richelieu, F-75002 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

On connaît déjà des contenants en carton plié et dont l'intérieur est revêtu d'une pellicule en matière synthétique thermo-formée, ce contenant comprenant des rebords supérieurs qui forment une sorte de trottoir.

Ce trottoir a deux buts qui sont respectivement de rigidifier le pourtour du contenant qui affecte généralement la forme d'une barquette et de recevoir un couvercle operculé c'est-à-dire fixé par collage ou soudage à chaud.

Ce type d'emballage est généralement destiné à recevoir des produits alimentaires dont certains sont coulants et il est donc impératif qu'il soit parfaitement étanche, ce qui suppose que la pellicule en matière synthétique est elle-même uniformément répartie, sans aucune irrégularité, à la fois sur le fond, sur les parois et sur le trottoir. Il est en effet important qu'en aucun endroit ne subsiste un passage à travers la pellicule car le carton ne présente évidemment pas les même qualités d'étanchéité que la matière synthétique elle-même. En outre, il est indispensable que le trottoir sont parfaitement plan puisqu'il est destiné à recevoir le couvercle dont la fixation est un des éléments essentiels de l'étanchéité du contenant fermé.

Il est très difficile d'obtenir ces rebords supérieurs de manière régulière, répétitive et industrielle. En effet, pour parvenir à un contenant économique, il est nécessaire de constituer la partie en carton à partir de flans découpés et rainés qui peuvent être stockés à plat et d'utiliser une matière synthétique très mince, le tout devant être assemblé par des moyens automatiques et peu coûteux qui excluent, bien évidemment, l'intervention manuelle, de sorte que le procédé utilisable est le thermo-formage de la pellicule en matière synthétique au-dessus d'une matrice dans laquelle le flan de carton se met en place et est maintenu dressé par la pellicule elle-même qui adhère sur toute la surface.

Pour obtenir un contenant réalisé de cette manière, on utilise un flan de carton découpé et rainé qui se présente à plat et qui doit être mis en forme au moyen de deux pliages inversés pour chaque face, à savoir un pliage vers le haut des parois par rapport au fond et un pliage vers le bas pour les rebords par rapport au sommet des parois.

Comme on l'a expliqué ci-dessus, il est impératif que les rebords constituent un trottoir rigoureusement plan pour des raisons d'esthétique, d'encombrement au stockage et surtout de perfection d'operculage.

Or, malgré les perfectionnements apportés par les demandeurs eux-mêmes notamment dans la demande de brevet français FR-A-2 404 566 du 03. 10. 77, l'obtention d'un tel trottoir reste une opération difficile c'est-à-dire qu'au niveau industriel, sur cent contenants fabriqués on en trouve encore quelques-uns pour devoir être mis au rebut du fait de l'imperfection des raccords des rebords rabattus.

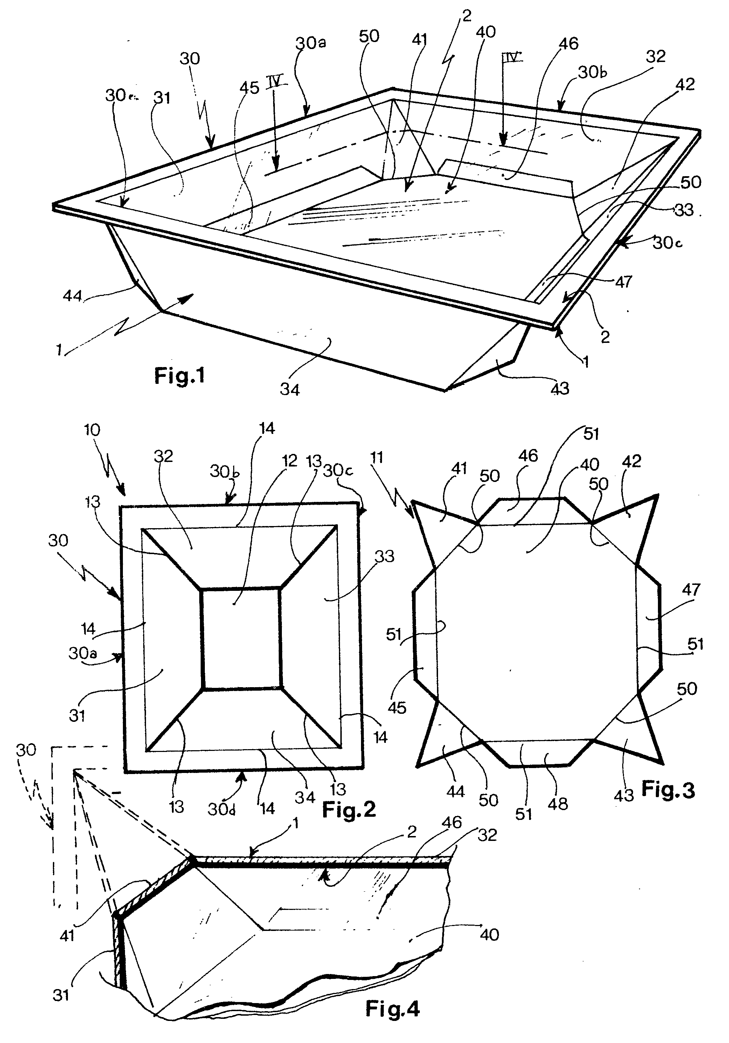

On connaît aussi le brevet allemand 1 486 954 qui concerne un emballage comprenant effectivement un cadre en une seule pièce et des parois articulées sur ce cadre mais il ne comprend pas de fond ni de paroi continue en carton et l'on voit notamment sur la figure 2, que les parties en carton sont le cadre 25, et les parois 26—27 tandis que le fond 22 et les parois 23 et 24 sont en matière synthétique.

Dans le brevet allemand 2 036 082 est décrit une boîte en carton comprenant une partie rapportée 12 à double parois, les parois extérieures se plaçant entre les parois de la boîte proprement dite 1 et des parois intérieures 5 provenant du découpage et du repliage du fond, qui, de ce fait, n'existe plus.

Ces dispositions diffèrent de celles de la présente invention sur de nombreux points:

— le fond d'un tel emballage (14) est rapporté et ne fait partie d'aucun des éléments précédemment décrits,
— les parois respectivement supérieure et inférieure ne sont pas alignées de manière régulière dans un même plan, mais sont placées les unes derrière les autres selon, au total, quatre épaisseurs pour chaque côté,
— les parties supérieure et inférieure ne sont pas réunies entre elles.
— les parties supérieure et inférieure ne tiennent ensemble que par la présence d'un troisième élément qui est une autre boîte en carton avec pattes de collage 7 et couvercle articulé.

La présente invention apporte une solution nouvelle à ce problème, grâce à laquelle un contenant du type comprenant une partie en carton et une pellicule thermo-formée en matière synthétique présente à la fois un fond, des parois régulièrement réparties sur toute sa périphérie et un rebord en une seule pièce absolument parfait et situé dans un plan rigoureusement déterminé.

A cette fin, l'invention a pour objet un contenant du type comprenant une partie en carton extérieure et une partie en matière synthétique associées l'une à l'autre et, plus précisément, du type selon lequel la partie en carton est découpée et pliée pour présenter un unique cadre en carton situé dans un seul plan, des parois et au moins un fond tandis que la partie en matière synthétique est constituée d'une seule pellicule qui est appliquée sur toute la surface de la partie en carton formant l'intérieur du contenant et l'extérieur du cadre et qui est rendue adhérente à toute cette surface pour maintenir en bonne position relative le cadre, les parois et le(s) fond(s), caractérisé en ce que la partie en carton est formée d'une ébauche comportant le cadre et des panneaux solidaires des côtés intérieurs du cadre et d'au moins une autre ébauche comportant un fond et des paneaux solidaires des côtés extérieurs du fond et en ce que les parois du contenant sont rendues continues par la juxtaposition de panneaux complémentaires à côtés obliques solidaires alternativement du cadre et d'au moins un fond.

Selon d'autres caractéristiques de l'invention:

— le fond, respectivement chaque fond, est solidaire de pattes pliées et applliquées contre des panneaux solidaires du cadre, sur la face intérieure de ceux-ci en considérant le contenant entier.

— le contenant est quadrangulaire et comprend un fond octogonal dont quatre côtés opposés sont solidaires, par des lignes de pliage, de panneaux soit triangulaires, soit trapézoïdaux, placés entre les panneaux solidaires du cadre et dont les quatre autres côtés situés entre les précédents sont solidaires par des lignes de pliage, de pattes appliquées contre les panneaux solidaires du cadre.

— le cadre comprend au moins un segment intérieur pour au moins deux panneaux opposés et le contenant comprend un fond solidaire de panneaux de chaque côté du segment intérieur pour constituer les fonds et les parois de compartiments complets tenus ensemble par le cadre et par le segment intérieur de celui-ci.

— le contenant comprend au moins deux segments intérieurs dont l'un au moins s'étend transversalement d'un bord à l'autre du cadre et l'autre d'un bord du cadre au précédent segment pour constituer au moins trois compartiments complets tenus ensemble par le cadre et par les segments intérieurs de celui-ci.

— le segment a une largeur au plus égale à celle d'un côté du cadre.

— le segment est raccordé au cadre par un gousset de renforcement.

— le segment est constitué par la tranche de deux panneaux opposés pliés, lesquels sont délimités par une simple incision du carton, de sorte que le segment n'est pratiquement que virtuel.

— les pattes appliquées contre les panneaux solidaires du cadre présentent des interruptions par lesquelles la pellicule adhère à la face interne du panneau correspondant solidaire du cadre jusque dans une zone la plus proche possible du fond.

— les interruptions sont formées par des espaces que déterminent au moins deux pattes par panneau solidaire du cadre.

— les interruptions sont formées par au moins une échancrure prévue dans une seule patte.

— les interruptions sont formées par des trous qui traversent de part en part le carton constituant les pattes.

— le cadre comporte des rebords pliés vers l'extérieur pour être sensiblement perpendiculaires au plan du cadre.

L'invention a également pour objet un procédé pour l'obtention d'un contenant tel que défini ci-dessus, caractérisé en ce que l'on crée par découpage et rainage des ébauches de deux types différents qui, ainsi, présentent, celle du premier type, un cadre et des panneaux solidaires des côtés intérieurs du cadre, celle du second type, un fond et des panneaux solidaires des côtés extérieurs dudit fond, puis que l'on place d'abord une ébauche du premier type et ensuite, sur le dessus, au moins une ébauche du second type selon une position et une orientation relative correctes au-dessus d'une matrice dont la forme et les dimensions intérieures correspondent à la forme et aux dimensions extérieures du contenant à obtenir, puis que l'on maintient le cadre de l'ébauche du premier type appliqué contre le bord de la matrice et que l'on maintient l'ébauche ou les ébauches du second type pour qu'elle(s) ne puisse(nt) pas subir de mouvement latéral et/ou de changement d'orientation, puis que l'on exerce une poussée perpendiculaire au plan commun des ébauches superposées et dirigée perpendiculaire au plan commun des ébauches superposées et dirigée vers le fond de la matrice pour provoquer simultanément le pliage des panneaux solidaires du fond dans le sens opposé au précédent et la pénétration du fond de l'ébauche du dessus jusqu'au fond de la matrice par l'intérieur du cadre afin que tous les panneaux du cadre et du fond se placent les uns entre les autres, selon une juxtaposition bord à bord, par appui contre les parois de la matrice, puis que l'on applique, de préférence par thermo-formage, une pellicule étanche en matière synthétique afin qu'elle s'étende et adhère sur le fond, sur tous les panneaux et sur le cadre et, qu'ainsi, tous ces éléments soient maintenus et forment en combinaison avec la pellicule, un contenant rigide et étanche susceptible de recevoir éventuellement un couvercle par solidarisation avec la pellicule située sur le dessus du cadre.

Selon d'autres caractéristiques de ce procédé:

— dans un premier temps, on exerce la poussée perpendiculaire au plan commun des ébauches au moyen d'un poinçon effaçable puis, dans un second temps, on applique la pellicule de préférence par thermoformage.

— on exerce la poussé perpendiculaire au plan commun des ébauches lors du thermo-formage, par la pellicule elle-même, au moyen de l'air comprimé habituel qui est appliqué sur cette pellicule.

— on découpe l'ébauche du premier type de telle manière que les panneaux restent reliés entre eux en laissant subsister une partie centrale à laquelle ils tiennent par des très petites languettes, celles-ci devant se rompre sous l'effet de la poussée exercée perpendiculairement au plan commun des ébauches, la partie centrale se trouvant ainsi sur le fond de la matrice et sous le fond de l'ébauche et devant être évacuée après formation du contenant.

L'invention sera mieux comprise par la description ci-après faite en référence au dessin annexé. Bien entendu, la description et le dessin ne sont donnés qu'à titre d'exemple indicatif et non limitatif.

— La figure 1 est une vue schématique en perspective d'un contenant conforme à l'invention réalisé sous forme d'une barquette simple;
— les figures 2 et 3 sont des vues en plan de deux ébauches en carton découpées et rainées conformément à l'invention;
— la figure 4 est une vue schématique partielle faite en coupe selon la ligne IV—IV de la figure 1;
— la figure 5 est une vue en plan d'un contenant conforme à l'invention réalisé sous forme d'une barquette à trois compartiments déterminés par un cadre périphérique et des segments intérieurs;
— la figure 6 est une vue en plan d'une ébauche de carton découpée et rainée conformément à l'invention pour constituer une partie des parois d'un compartiment du contenant de la figure 5;
— la figure 7 est une vue schématique en coupe faite selon la ligne VII-VII de la figure 5;
— la figure 8 est une vue schématique en coupe fait selon la ligne VIII-VIII de la figure 5;
— les figures 9 et 10 sont des vues schématiques partielles montrant un mode de réalisation d'un segment intérieur du cadre permettant de déterminer deux compartiments séparés;
— les figures 11 et 12 sont des vues schématiques en coupe d'une barquette du type de celui de la figure 1 montrant, la première, un fond convenablement assemblé et, la seconde, un fond convenablement assemblé mais déformé;
— les figures 13 et 14 sont des vues schématiques montrant un mode de réalisation permettant d'éviter l'inconvénient représenté sur la figure 12;
— les figures 15 et 16 sont des vues schématiques partielles montrant deux variantes possibles permettant de supprimer le défaut représenté sur la figure 12;
— la figure 17 représente deux ébauches en carton conforme à l'invention superposées pour leur combinaison en une seule opération mécanique en vue de leur fixation au moyen d'une pellicule synthétique thermoformée;
— les figures 18, 19 et 20 sont des vues schématiques en coupe montrant l'association des deux ébauches en carton de la figure 17:
— la figure 21 est une vue schématique en coupe montrant la mise en place simultanée des deux ébauches en carton et d'une pellicule thermo-formée pour l'obtention en une seule opération d'un contenant conforme à l'invention;
— la figure 22 et une vue en plan d'une ébauche en carton réalisée selon une variante de l'invention.

En se reportant au dessin, on voit qu'un contenant conforme à l'invention est du type comprenant une partie en carton extérieur 1 et une partie en matière synthétique 2 associés l'une à l'autre et, plus précisément, du type selon lequel la partie en carton 1 est découpée et pliée pour présenter un unique cadre en carton 30 situé dans un seul plan, des parois 31, 32, 33, 34, 41, 42, 43, 44 et au moins un fond 40, tandis que la partie en matière synthétique 2 est constituée d'une seule pellicule qui est appliquée sur toute la surface de la partie en carton 1 formant l'intérieur du contenant et l'extérieur du cadre 30 et qui est rendue adhérente à toute cette surface pour maintenir en bonne position relative le cadre 30, les parois 31 à 34 et 41 à 44 et le fond 40, et est caractérisé en ce que le parois sont rendues continues par la juxtaposition, selon un même alignement de leurs faces, de panneaux complémentaires à côtés obliques solidaires alternativement du cadre 30 (panneaux 31, 32, 33 et 34) et du fond 40 (panneaux 41, 42, 43 et 44).

Selon une caractéristique de l'invention, le fond 40 (ou chaque fond lorsqu'il y en a plusieurs comme on le verra ci-après) est solidaire de pattes 45, 46, 47 et 48 pliées et appliquées contre les panneaux 31, 32, 33 et 34 solidaires du cadre 30 sur la face intérieure de ceux-ci en considérant le contenant entier.

Selon le mode de réalisation représenté sur les figures 1, 2 et 3, le contenant est quadrangulaire et comprend un fond 40 octogonal dont quatre côtés opposés sont solidaires par des lignes de pliage 50, de panneaux triangulaires 41, 42, 43 et 44 placés entre les panneaux 31, 32, 33 et 34 solidaires du cadre 30 et dont les quatre autres côtés situés entre les précédents sont solidaires par des lignes de pliage 51, de pattes 45, 46, 47 et 48 appliquées contre les panneaux 31, 32, 33 et 34 solidaires du cadre 30.

On voit qu'avec ce mode de réalisation, la partie en carton 1 est composée de deux ébauches obtenues par découpage et rainage d'un flan de carton.

L'ébauche 10 représentée ici est carrée et comprend un évidement central de même forme 12 prolongé par des fentes 13 jusqu'à des lignes de rainage 14 formées avantageusement par une incision »à mi-chair«.

La seconde ébauche 11 est découpée dans la forme représentée sur la figure 3 pour présenter les différents éléments déjà décrits plus haut.

Pour obtenir la partie en carton complète, puis le contenant terminé, on peut agir de la manière suivante:

On place l'ébauche 10 au-dessus d'une matrice de telle sorte que le cadre 30 soit posé sur le pourtour de cette matrice et, par exemple avec un poinçon, on force les panneaux 31, 32, 33 et 34 solidaires du cadre 30 à se plier vers l'intérieur le long des lignes de rainages 14. Tout en maintenant le cadre 30, mais en retirant le poinçon, on place l'ébauche 11 sur l'ébauche 10 de telle sorte que les deux ébauches aient une position et une orientation relatives correctes et, avec un poinçon, on agit sur le fond 40 pour obliger celui-ci à s'engager jusqu'au fond de la matrice ce qui oblige les panneaux triangulaires 41, 42, 43 et 44 ainsi que les pattes 45, 46, 47 et 48 à se plier vers le haut selon les lignes de rainage respectivement 50 et 51.

Les dimensions des différents éléments ainsi que la pente donnée aux bords de la matrice correspondant à la pente des panneaux 31, 32, 33 et 34 du contenant terminé sont telles que les panneaux triangulaires 41, 42, 43 et 44 trouvent exactement leur place entre les panneaux 31, 32, 33 et 34 solidaires du cadre 30, de sorte que les parois intérieures du contenant constituées par la succession des panneaux 31, 41, 32, 42, 33, 43, 34 et 44 sont continues puisque les panneaux solidaires du cadre 30 et les panneaux solidaires du fond 40 sont juxtaposées bord à bord ainsi que cela se voit clairement sur la figure 4.

Les deux ébauches 10 et 11 ainsi conformées sont maintenues ainsi étroitement associées, puis fixées dans cette position définitive au moyen d'une pellicule 2 qui est thermo-formée pour s'appliquer et adhérer sur toute la surface du fond 40, des parois intérieures 31, 41, 32, 42, 33, 43, 34 et 44 ainsi que sur le dessus du cadre 30.

La pellicule thermo-formée 2 assure ainsi le collage des panneaux alignés tout en assurant l'étanchéité parfaite, du fait qu'elle obture les petites fentes ou espaces qui pourraient subsister entre les éléments solidaires du cadre 30 et les éléments solidaires due fond 40.

En outre, les pattes 45, 46, 47 et 48 appliquées contre la face intérieure des panneaux 31, 32, 33 et 34 sont fixées à ces panneaux par la pellicule 2 de telle sorte que le fond 40 est solidaire des parois de chacun de ces huit côtés soit du fait de l'existence des panneaux triangulaires 41, 42, 43 et 44 soit par la présence des pattes 45, 46, 47 et 48.

Ceci garantit une grande solidité au contenant qui peut recevoir des produits relativement lourds.

Sur les figures 1 à 4, on a représenté un contenant qui consiste en une sorte de barquette à compartiment unique et qui peut être utilisé soit en l'état, soit formé par un opercule constitué notamment par un couvercle dont la face intérieure est revêtue au moins sur son pourtour d'une pellicule en matière synthétique susceptible d'être associée à celle qui revêt le cadre 30, soit par collage soit par soudure comme cela est connu en soi.

Grâce au fait que le cadre est obtenu d'une seule pièce par découpage dans un même flan de carton, l'operculage est obtenu avec un haut degré de qualité et de fiabilité car l'absence d'irrégularité sur la face de scellage permet d'obtenir une étanchéité à cent pour cent et, cela, d'une manière industrielle, c'est-à-dire répétitive pratiquement sans rebuts.

Les pattes 45, 46, 47 et 48 sont appliquées contre les panneaux 31, 32, 33 et 34 non pour fermer une fente mais pour renforcer la solidité du contenant en »accrochant« le fond aux panneaux solidaires du cadre 30.

La surépaisseur ainsi formée ne nuit pas à la mise en place de la pellicule car cette surépaisseur se trouve en regard d'une grande surface et la différence de niveau est aisément compensée par la pellicule synthétique 2 qui s'étale sur cette grande surface.

Les pattes 45, 46, 47 et 48 ont pour avantage supplémentaire de contribuer à la rigidité de l'emballage en constituant au droit des arêtes inférieures du contenant des renforts qui agissent à la manière d'une nervure.

On peut, toutefois, ne pas utiliser ces pattes 45, 46, 47 et 48 lorsque la pellicule synthétique 2 est suffisamment résistante tant à l'égard de ses caractéristiques mécaniques qu'à l'égard de sa force d'adhérence puisqu'alors le fond 40 est assujetti de manière suffisamment efficace aux panneaux solidaires au cadre 30.

Le mode de réalisation des figures 1 à 4 représente un contenant conforme à l'invention sous forme d'une barquette simple, à un seul compartiment, pour un produit uniforme ou des produits pouvant être mélangés.

Mais l'invention permet également la fabrication de contenants compartimentés pour l'emballage unitaire, avec être mélangés et, notamment, des aliments.

En effet, selon une caractéristique de l'invention, le cadre 30 comprend au moins un segment intérieur 35-36 pour au moins deux panneaux opposés 33a-31b, 34a et 32c, et le contenant comprend un fond 40a-40b-40c solidaire de panneaux 41a à 44a, 41b à 44b, 41c à 44c, de chaque côté du segment intérieur 35-36 pour constituer les fonds et les parois de compartiments complets tenus ensemble par le cadre 30 et par son segment intérieur 35-36.

Selon une variante de ce mode de réalisation, le contenant comprend au moins deux segments intérieurs 35 et 36 dont l'un au moins, 35, s'étend transversalement d'un bord à l'autre 30a-30c du cadre 30 et l'autre, 36, d'un bord 30b du cadre 30 au précédent segment 35 pour constituer au moins trois compartiments complets tenus ensemble par le cadre 30 et les segments 35 et 36.

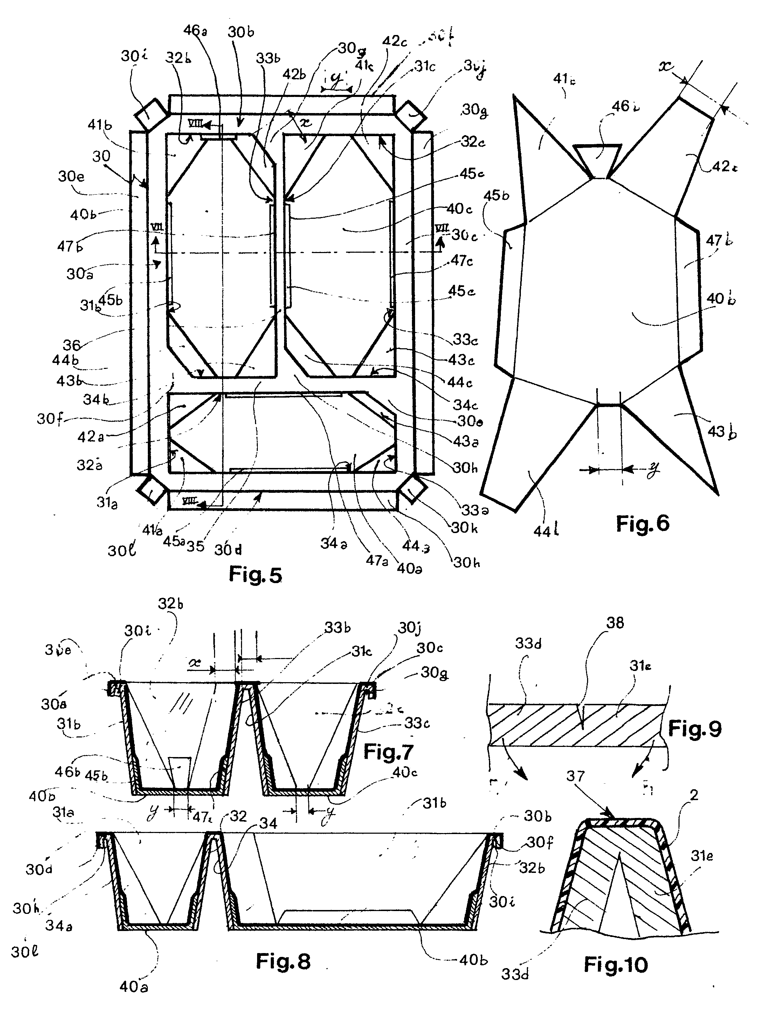

Sur les figures 5 à 8, on a représenté un tel mode de réalisation de l'invention et l'on voit qu'un contenant comprend alors une ébauche pour le cadre 30 et ses segments 35 et 36 ainsi que pour tous les panneaux qui en sont solidaires et qui sont au nombre de quatre pour chaque compartiment, de telle sorte que l'on peut assimiler chacun de ceux-ci à une barquette du type représenté sur la figure 1.

C'est pourquoi l'on a adopté les mêmes références affectées de la lettre a, b ou c selon le compartiment considéré.

Le segment transversal 35 détermine avec les bords 30a, 30c et 30d un premier compartiment dont les parois sont formées par la combinaison de panneaux 31a, 33a et 34a solidaires du cadre 30 et 32a solidaire du segment 35 ainsi que de panneaux 41a, 42a, 43a et 44a solidaires d'un fond 40a.

Etant donné la forme oblongue du compartiment ainsi créé, on n'a prévu que deux pattes 45a et 47a sur les côtés longs car sur les côtés courts, les panneaux 31a et 33a sont pratiquement triangulaires de sorte que le fond 40a est convenablement maintenu par ses panneaux.

Entre le côté 30b du cadre 30 et le segment 35, se trouve un second segment 36 qui détermine deux compartiments analogues à celui que vient d'être décrit.

Pour chacun de ces deux compartiments, on retrouve donc trois panneaux solidaires du cadre 30 (31b, 32b et 34b d'une part, 32c, 33c et 34c d'autre part) et deux panneaux solidaires du segment 36 (33b d'une part et 31c d'autre part) ainsi que deux fonds respectivement 40b et 40c solidaires chacun de panneaux respectivement 41b, 42b, 43b et 44b ainsi que 41c, 42c, 43c et 44c.

Les deux compartiments supérieurs parallèles étant du même type que le compartiment transversal, on retrouve ici la présence de pattes de collage respectivement 45b et 47b d'une part et 45c et 47c d'autre part.

Selon une variante du mode de réalisation selon lequel le cadre comprend au moins un segment intérieur, ce segment a une largeur au plus égale à celle d'un côté du cadre 30.

On peut, alors, fixer l'opercule à la fois sur les quatre côtés du cadre 30 et sur le segment transversal ce qui signifie, dans les cas représenté sur les figures 5 à 8, que la fixation de l'opercule se fait sur les deux segments 35 et 36 en plus des quatre côtés du cadre 30.

Mais il est également possible, selon une autre variante, de prévoir le ou les segments intérieurs selon une largeur nettement inférieure à celle des côtés du cadre 30.

Dans ce cas, un segment étroit est fragile et pourrait être endommagé à l'occasion des manipulation du contenant, notamment par déchirure à l'endroit où le segment se raccorde au cadre 30.

Pour éviter cet accident, et, par conséquent, pour donner au contenant plus de solidité, on prévoit conformément à l'invention, que le segment (ici les segments 35 et 36) est raccordé au cadre 30 par un gousset de renforcement.

Ces dispositions sont particulièrement visibles sur la figure 5 qui montre que le segment transversal 35 est raccordé au côté 30c du cadre 30 par un gousset 30e qui revient à donner localement, au voisinage du bord 30c du cadre 30, une largeur plus importante au segment 35 que celle qu'il présente dans son ensemble.

Pour les mêmes raisons, le segment 35 se raccorde au côté 30a du cadre 30 par un gousset 30f.

Les considérations qui précèdent à propos du segment 35 sont bient entendu valables pour le segment 36 et l'on voit que ce dernier se raccorde d'une part au côté 30b du cadre 30 par un gousset 30g et d'autre part, au segment 35 par un gousset 30h.

On voit qu'aux deux extrémités de chacun des segments 35 et 36 se trouve un gousset qui augmente localement leur largeur et constitue une sorte d'arc-boutant.

La présence de ce gousset qui constitue un pan coupé à l'endroit où devrait se trouver un angle destiné à recevoir un panneau solidaire du fond correspondant, oblige à donner au panneau considéré non plus la forme d'un triangle comme c'était le cas sur la figure 3, mais la forme d'un trapèze ainsi que cela est visible sur la figure 6.

Sur cette figure 6, on a représenté l'ébauche en carton qui comprend le fond 40b et les différentes pièces qui en sont solidaires pour constituer en coopération avec les panneaux solidaires du cadre, le compartiment qui se trouve en haut à gauche sur la figure 5.

On y retrouve tous les éléments déjà décrits dont il n'est, par conséquent, pas nécessaire de refaire l'inventaire.

On remarque que ce compartiment étant délimité selon deux de ses côtés par des segments, il comprend deux goussets qui sont respectivement 30f et 30g.

L'ébauche en carton de la figure 6 présente donc deux panneaux triangulaires 41b et 43b du même type que celui déjà décrit, tandis que les panneaux 42b et 44b sont trapézoïdaux pour se terminer par un côté de largeur x correspondant exactement à la longueur des goussets correspondant 30f et 30g mesurée selon la ligne oblique qui relie le bord du cadre 30 au segment correspondant.

Cette disposition particulière des panneaux 42b et 44b n'a pas de conséquence quant à l'obtention du contenant fini puisque la mise en place des deux ébauches l'une par rapport à l'autre se fait de manière inchangée par rapport à ce qui a été précisé plus haut.

La géométrie de ce montage a pour conséquence de donner aux panneaux trapézoïdaux 42b et 44b une pente plus grande que celle des panneaux triangulaires 41b et 43b d'où il résulte une très légère diminution du volume utile mais celle-ci est très petite et insignifiante par comparaison à l'intérêt des goussets pour la solidité générale du contenant.

La forme oblongue donnée ici aux compartiments, conduit à donner au fond 40 correspondant deux grands côtés sur lesquels peuvent se trouver des pattes de collages 45 et 47 et deux petits côtés de largeur y très faible, voire nulle, s'ils raccordent directement (à la manière des deux côtés d'un angle) les bords qui se font face de deux panneaux adjacents.

Dans l'exemple représenté, la distance y est faible mais tout de même substantielle de sorte qu'il est possible, soit de laisser subsister un bord franc comme cela est visible dans le cas de la figure 6, soit de prévoir une patte 46b sensiblement de la forme représentée dans la partie supérieure de la même figure 6.

Naturellement, il semble logique de prévoir, dans la pratique, que l'ébouche présente soit deux bords francs symétriques, soit deux pattes du type 46b symétriques.

On a représenté les deux solutions sur une même figure pour simplifier le dessin.

Lorsque l'ébouche de la figure 6 est mise en place pour contribuer à la constitution du compartiment situé en haut à gauche de la figure 5, la patte 46b est appliquée contre la face 32b solidaire du cadre 30 et est maintenue dans cette position par la pellicule thermo-formée 2 ainsi que cela a été décrit plus haut et comme cela est représenté dans la partie gauche de la figure 7.

Selon une variante de l'invention, le cadre 30 comporte des rebords 30e à 30l pliés vers l'extérieur pour être sensiblement perpendiculaires au plan du cadre 30.

Ici, on a choisi de prévoir des pans coupés aux quatre angles. Il en résulte que l'on doit prévoir des rebords 30i, 30j, 30k et 30l pliés le long de chaque pan coupé si l'on veut que tous les rebords forment un ensemble continu. Mais l'on peut ne pas prévoir ces rebords 30i à 30l si l'on accepte une discontinuité. Naturellement, on peut aussi ne pas prévoir les pans coupés.

Ces rebords constituent avec le cadre 30 une sorte de cornière de rigidification grâce à laquelle le contenant résiste à la flexion, particulièrement le long du segment transversal 35.

En conséquence, on pourrait se contenter, théoriquement, de prévoir les rebords 30e et 30g perpendiculaires au segment 35. Dans la pratique, il est préférable de prévoir aussi les rebords 30f et 30h qui servent à maintenir en place les rebords 30e et 30g du fait que la pellicule 2 recouvre le cadre 30 et tous ses rebords.

Comme on l'a indiqué plus haut, il est possible de donner au segment transversal (ou aux segments transversaux) une largeur quelconque qui, dans la pratique, ne doit pas dépasser celle des bords du cadre 30.

Il est également possible de créer un tel segment selon une épaisseur extêmement faible et qui ne dépend que de l'épaisseur de l'ébauche en carton.

Sur les figures 9 et 10, on a représenté une telle variante qui est caractérisée en ce que le segment 37 est constitué par la tranche de deux panneaux opposés pliés 33d et 31e, lesquels sont délimités par une simple incision 38 du carton, de sorte que le segment 37 n'est pratiquement que virtuel.

La figure 9 représente en coupe une ébauche de carton à l'endroit ou doit être créé un segment transversal et on a volontairement adopté une très grande échelle pour montrer clairement la réalisation de cette variante.

On a adopté la même référence de panneaux que précédemment mais affectée respectivement de la lettre d et de la lettre e afin que l'on puisse facilement faire une comparaison entre le segment créé selon la présente variante des figures 9 et 10 et la variante précédente représentée par les figures 5 et 7 en particulier.

Au lieu de prévoir deux lignes de rainage pour délimiter un segment du type 36 solidaire de panneaux pliables 33b et 33c, on effectue dans l'ébauche en carton une simple incision 38, dite »à mi-chair« dans l'axe du segment que l'on veut créer.

Lors de la mise en forme de l'ébauche, on plie les panneaux 33d et 31e situés de part et d'autre de l'incision 38 selon les flèches F1 de telle manière que les deux panneaux 33d et 31e se trouvent pliés l'un contre l'autre sans qu'il subsiste entre eux un espace sensible ainsi que cela est visible sur la figure 10.

Lors de la finition du contenant par thermoformage de la pellicule thermo-plastique 2, cette dernière recouvre les panneaux 33d et 31e ainsi que la tranche supérieure dont la largeur est égale à la double épaisseur du carton qui constitue l'ébauche.

Dans la réalité, l'épaisseur de cette ébauche est telle que le segment a une largeur presque imperceptible.

Naturellement, ces dispositions se prêtent mal au soudage d'un opercule sur un tel segment et, dans la pratique, on ne choisira cette solution que dans l'hypothèse où les produits placés dans chacun des deux compartiments séparés par un tel segment 37, ne sont pas liquides et ne peuvent par conséquent pas passer entre le sommet du segment 37 et l'opercule, ce qui est le cas, notamment, des aliments solides tels que des biscuits.

En revanche, l'intérêt d'un segment aussi fin est de ménager un volume utile aussi grand que possible puisque ce volume n'est pas diminué par la présence d'une séparation de largeur substantielle comme c'est le cas des segments 35 et 36 et comme cela serait encore plus net si de tels segments avaient la même largeur que les bords du cadre 30.

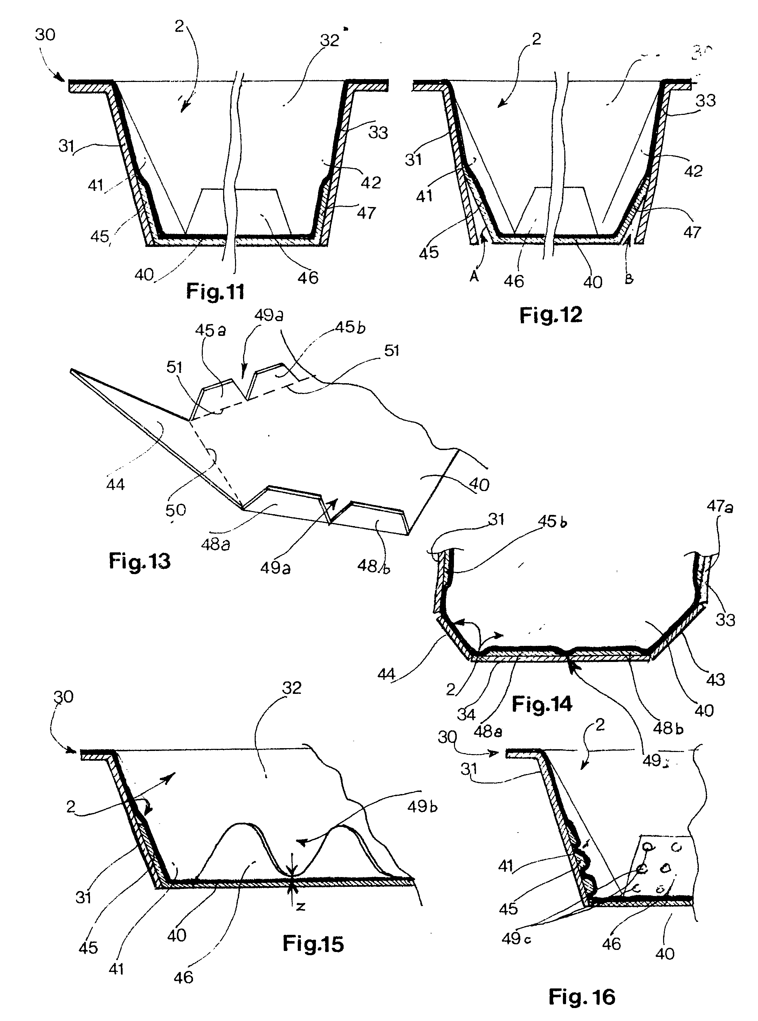

Sur la figure 11, on a represente en coupe un contenant conforme à l'invention réalisé selon le mode de réalisation des figures 1 à 4, c'est-à-dire sous forme d'une barquette simple.

Sur cette figure 11, on voit comment la pellicule 2 adhère à la fois sur le fond 40, sur les pattes 45, 46 et 47 ainsi que sur les panneaux correspondants 31, 32 et 33, afin de solidariser l'ensemble.

Sur cette figure, on a représenté le cas dessiné d'une manière théorique, c'est-à-dire selon lequel les panneaux 31 et 33 restent parfaitement appliqués contre les pattes 45 et 47 bien qu'au droit de ces dernières ces panneaux ne soient pas collés de l'extérieur.

Dans la réalité, il peut se produire un décollement, ou un »baîllement«, comme cela est représenté sur la figure 12.

Sur cette figure, on retrouve les mêmes éléments mais l'on voit que le collage par la pellicule 2 des pattes 45 et 47 sur les panneux 31 et 33 ne garantit pas la parfaite application de ces panneaux sur la face extérieure des pattes 35 et 47 puisque l'on distingue des espaces (volontairement exagérés) A et B.

Bien que cela ne nuise pas directement à la solidité et à la rigidité du contenant, les espaces A et B peuvent être à l'origine de déchirures ou de coincements des contenants sur des étagères de sorte qu'il est utile d'en éviter la formation autant que faire se peut.

Selon une caractéristique de l'invention, les pattes 45, 46, 47 et 48 appliquées contre les panneaux 31, 32, 33 et 34 solidaires du cadre 30 présentent des interruptions 49a, 49b ou 49c, par lesquelles la pellicule 2 adhère à la face interne du panneau 31, 32, 33 ou 34 correspondant solidaire du cadre 30 jusque dans une zone la plus proche possible du fond 40.

Sur les figures 13 et 14, on a représenté schématiquement une variante de ce mode de réalisation selon laquelle les interruptions 49a sont formées par des espaces qui déterminent au moins deux pattes 45a-45b, 46a-46b, 47a-47b, 48a-48b par panneau solidaire du cadre 30.

Sur la figure 14, on voit bien que la pellicule synthétique thermo-formée 2 s'applique sur le panneau solidaire du cadre 30 en se plaçant dans l'interruption, ou espace 49a, ce qui permet de diviser par deux la longueur libre du panneau extérieur susceptible de provoquer un »bâillement« A ou B.

Naturellement, on pourrait obtenir un résultat encore meilleur en prévoyant non pas une seule interruption 49a créant deux pattes mais deux ou plusieurs espaces créant plusieurs pattes, car alors, le panneau extérieur solidaire du cadre 30 serait maintenu pratiquement en pointillé sur une très grande fraction de sa longueur ce qui éviterait toute possibilité de bâillement.

Selon une autre variante représentée sur la figure 15, les interruptions 49a sont formées par au moins une échancrure prévue dans une seule patte 45, 46, 47, 48.

On voit sur la figure 15 que l'échancrure 49b laisse subsister une fraction de patte z de sorte que la pellicule 2 qui maintiendra la patte 46 appliquée contre le panneau 32 laissera subsister une petite partie de ce panneau non collée sur la même hauteur z mais, cela n'a pas une importance capitale puisque ce qui est essentiel c'est de reporter le collage du panneau extérieur suffisamment bas, près du fond 40, pour éviter le bâillement.

Entre la solution des figures 13 et 14 d'une part, et la solution de la figure 15 d'autre part, on choisira le meilleur compromis qui, sans laisser subsister un trop grand espace entre le fond et le panneau correspondant solidaire du cadre 30, permettra néanmoins de coller ce panneau solidaire du cadre 30 le plus près possible du fond 40.

Sur la figure 16, on voit une autre variante de ce mode de réalisation selon laquelle les interruptions 49c sont formées par des trous qui traversent de part en part le carton constituant les pattes 45, 46, 47 et 48.

On voit que la pellicule thermo-formée 2 pénètre par point dans chacun des trous 49c et maintient le panneau correspondant solidaire du cadre 30 non seulement dans sa partie basse mais sur une zone répartie substantiellement sur la surface de la patte correspondante, en vue d'éviter à la fois le bâillement du type A et B représenté sur la figure 12 ou même une déformation par gonflement des panneaux extérieurs solidaires du cadre 30.

Selon une variante de l'invention, on prévoit de placer contre les faces intérieures des parois une feuille ou nappe d'un matériau ayant des qualités particulières et, notamment, d'isolation thermique. On peut prévoir ce même matériau à l'intérieur du couvercle (plat ou creux) pour obtenir un contenant à la fois étanche et isolant, bien adapté à l'emballage de produits froids tels que des crèmes glacées ou chaudes tels que des mets réchauffés dans le contenant lui-même.

Cette feuille, ou nappe, est emprisonnée et fixée par la pellicule 2. Pour assurer cette fixation, la feuille, ou nappe, doit s'étendre un peu moins haut que les parois afin que la pellicule 2 puisse s'y coller. On peut aussi, prévoir quelques trous par lesquels la pellicule 2 atteint le carton des parois mais ils doivent être plus nombreux pour ne pas détruire l'isolation thermique.

L'invention a également pour objet un procédé permettant d'obtenir un contenant du type décrit ci-dessus caractérisé en ce que l'on créé par découpage et rainage, des ébauches de deux types différents qui, ainsi, présentent celle du premier type, 10, un cadre 30 et des panneaux 31, 32, 33 et 34 solidaires des côtés intérieurs du cadre 30, celle de second type, 11, un fond 40 et des panneaux 41, 42, 43 et 44 solidaires des côtés extérieurs dudit fond 40, puis que l'on place d'abord une ébauche du premier type 10, et ensuite sur le dessus de celle-ci, au moins une ébauche du second type 11 selon une position et une orientation relatives correctes au-dessus d'une matrice 60 dont la forme et les dimensions intérieures du contenant obtenue, puis que l'on maintient le cadre 30 de l'ébauche du premier type 10 appliqué contre le bord de la matrice 60 et que l'on maintient l'ébauche ou les ébauches du second type 11 pour qu'elle(s) ne puisse(nt) pas subir de mouvement latéral et/ou de changement d'orientation, puis que l'on exerce une poussée perpendiculaire au plan commun des ébauches 10 et 11 superposées et dirigée vers le fond de la matrice 60 pour provoquer simultanément le pliage des panneaux 31, 32, 33 et 34 solidaires du cadre 30 vers le fond de la matrice, le pliage des panneaux 41, 42, 43 et 44 solidaires du fond 40 dans le sens opposé au précédent et la pénétration du fond 40 de l'ébauche 11 du dessus jusqu'au fond de la matrice 60 par l'intérieur du cadre 30 afin que tous les panneaux 31 à 34 du cadre 30 et 41 à 44 du fond 40 se placent les uns contre les autres, bord à bord, selon un même alignement de leurs faces par appui contre les parois de la matrice 60, puis que l'on applique, de préférence par thermo-formage, une pellicule étanche 2 en matière synthétique afin qu'elle s'étende et adhère sur le fond 40, sur tous les panneaux 31 à 34 et 41 à 44 et sur le cadre 30 et, qu'ainsi, tous ces éléments soient maintenus et forment, en combinaison avec la pellicule 2, un emballage rigide et étanche susceptible de recevoir éventuellement un couvercle par solidarisation avec la pellicule 2 située sur le dessus du cadre 30.

Pour la mise en œuvre de ce procédé, on peut utiliser un processus continu ou un processus discontinu.

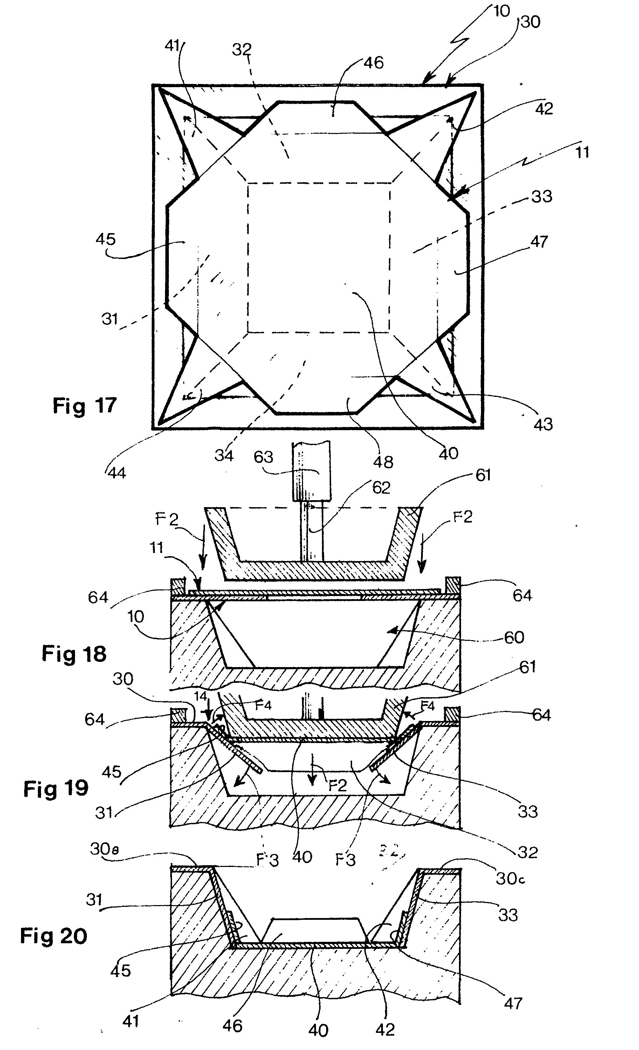

Dans le premier cas, on découpe les ébauches 10 et 11 dans du carton qui se déroule de bobines puis on les superpose comme indiqué sur la figure 17, puis on poursuit le processus par thermo-formage de la pellicule 2 comme cela est connu en soi et, notamment, en utilisant une »chaîne à godets« qui déplace la matrice 60 de poste en poste.

Dans le second cas, on utilise des ébauches 10 et 11 déjà découpées et on les superpose comme indiqué sur la figure 17.

Dans un cas comme dans l'autre, on peut obtenir la mise enforme conjuguée des deux ébauches 10 et 11 au moyen d'un poinçon, puis, ensuite, la mise en place de la pellicule 2 par thermo-formage sur des ébauches de carton maintenues dans une position au moins approximative, ou bien obtenir simultanément la mise en place des ébauches 10 et 11 et le thermo-formage de la pellicule 2.

Sur les figures 18 à 20, on a représenté un mode de réalisation selon lequel on agit en deux temps, le premier consistant à mettre en forme les ébauches en carton et le deuxième consistant à thermo-former la pellicule synthétique.

Ces figures illustrent donc une variante du procédé conforme à l'invention caractérisée en ce que l'on exerce la poussée perpendiculaire au plan commun des ébauches 10 et 11 au moyen d'un poinçon effaçable 61 et que l'on applique ensuite la pellicule 2 de préférence par thermo-formage.

Sur la figure 18, on voit les deux ébauches 10 et 11 superposées dans la position représentée en plan sur la figure 17 et, au-dessus d'elles, un poinçon 61 relié ici, à titre de schéma explicatif, à la tige 62 d'un vérin hydraulique 63.

Lorsque la pression hydraulique est établie dans le vérin 63, la tige 62 s'abaisse ainsi que le poinçon 61 dans le sens des flèches F2 tandis que des ébauches sont maintenues et que, notamment, le cadre 30 est energiquement appliqué contre le bord de la matrice 60 par des éléments 64 qui se placent entre les pointes des panneaux triangulaires 41, 42, 43 et 44 qui s'étendent par dessus le cadre 30 lorsque les deux ébauches 10 et 11 sont superposées.

Sur la figure 19, on voit une position intermédaire dans laquelle le poinçon 61 a commencé à descendre et a commencé à contraindre les panneaux 31, 32, 33 et 34 à se plier vers le bas dans le sens des flèches F3. Simultanément, le poinçon 61 pousse le fond 40 dans le sens de la flèche F2 et oblige les panneaux 41, 42, 43 et 44 à se redresser en même temps que les pattes 45, 46, 47 et 48 dans le sens des flèches F4 et respectivement selon les lignes de rainage 50 et 51.

Sur la figure 20, on voit les deux ébauches 10 et 11 entièrement pliées et mises en forme, le poinçon 61 étant en position d'effacement et, de ce fait, n'étant pas repésenté.

Les deux ébauches 10 et 11 tiennent ensemble sensiblement dans la position représentée grâce au fait que les panneaux 41, 42, 43 et 44 sont en quelque sorte »encastrés« entre les panneaux 31, 32, 33 et 34 puisqu'ils sont tous alignés pour constituer les parois du contenant.

On peut alors mettre en place une feuille en matière synthétique soit par thermo-formage, soit par emboîtement d'une ébauche.

Dans les deux cas, il est nécessaire que la matière synthétique rapportée adhère à toute la surface intérieure du contenant et à la surface supérieure du cadre 30 et l'on peut, comme cela est connu en soi, soit prévoir un adhésif sur la matière synthétique elle-même, soit sur les ébauches 10 et 11.

Selon une autre variante du procédé conforme à l'invention, on exerce la poussée perpendiculaire au plan commun des ébauches 10 et 11 lors du thermo-formage, par la pellicule 2 elle-même, au moyen de l'air comprimé habituel qui est appliqué sur cette pellicule 2.

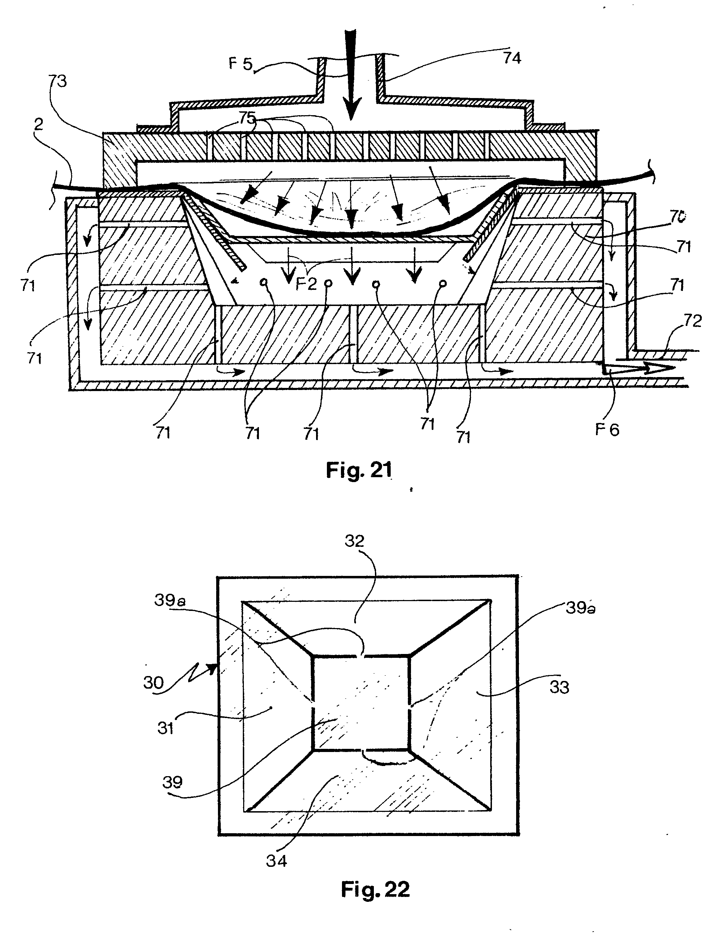

Sur la figure 21, on a repésenté en coupe schématique un dispositif de thermo-formage qui comprend, d'une part, ainsi que cela est connu en soi, une matrice 70 qui est reliée par des passage 71 et une tubulure 72 à des moyens aptes à créer une dépression et d'autre part, un »couvercle« 73 replié par une tubulure 74 à une source d'air comprimé qui est distribué par des passages 75.

A cet ensemble est associé un dispositif non représenté permettant de soulever le couvercle 73 et d'amener une feuille de matière synthétique 2 à l'aplomb de la matrice 70, par-dessus les deux ébauches superposées 10 et 11 de la même manière que cela a été décrit ci-dessus en regard des figures 18 à 20.

Le cadre doit également être énergiquement maintenu par exemple en prévoyant un pourtour périphérique solidaire de ce cadre 30 afin que le couvercle 73 s'applique de manière étanche sur l'ensemble sans pour autant empêcher les mouvements de repliement des panneaux 41, 42, 43 et 44 et des pattes 45, 46, 47 et 48.

Lorsque des deux ébauches 10 et 11 sont superposées et dans la position voulue, on abaisse le couvercle 73 puis, comme cela est connu en soi, on chauffe la pellicule 2, puis l'on conduit de l'air comprimé selon la flèche F5 pour que cet air soit distribué par les passage 75 et aboutisse au-dessus de la pellicule 2.

Simultanément, on établit une dépression se-

lon la flèche F6 de telle sorte que la pellicule 2 exerce sur le fond 40 de l'ébauche 11 la poussée perpendiculaire au plan commun des ébauches 10 et 11, cette poussée verticale dans le sens de flèches F2 obligeant, comme expliqué ci-dessus, les différents panneaux de se plier.

Au fur et à mesure que la pellicule 2 se distend, la poussée verticale selon les flèches F2 se complète par une poussée latérale qui applique, en combinaison avec les effets de la dépression, les panneaux 31, 32, 33 et 34 ainsi que les panneaux 41, 42, 43 et 44 contre les parois de la matrice 70.

Comme dit plus haut, la pellicule 2 adhère à tout l'intérieur du contenant et à l'extérieur du cadre 30 pour donner à l'emballage sa constituion définitive.

On peut alors, comme cela est connu, interrompre la dépression et l'arrivée de l'air comprimé, soulever le couvercle 73 et découper en même temps la pellicule 2 et le pourtour du cadre en carton 30 pour lui donner ses dimensions extérieures définitives.

Le contenant est alors extrait de la matrice 70 et peut être ensuite rempli et operculé le cas échéant ou stocké pour être utilisé en l'état.

On voit que conformément à l'invention, le cadre 30 en une seule pièce et placé sur les bords de la matrice, constitue un plan de référence fixe pendant toute la mise en forme du contenant et sa finition par la mise en place de la feuille synthétique et que, de plus, tous les éléments autres que le cadre fixe 30 et le fond plan 40 se plient dans le sens correspondant à l'action naturelle d'une poussée unique verticale et dirigée de haut en bas.

Il ne se développe donc aucun mouvement susceptible de contrarier la mise en place correcte des parties assemblées, qu'elles soient en carton ou en matière synthétique.

La figure 22 illustre une variante du procédé conforme à l'invention selon laquelle on découpe l'ébauche 10 du premier type de telle manière que les panneaux 31, 32, 33 et 34 restent reliés entre eux en laissant subsister une partie centrale 39 à laquelle ils tiennent par de très petites languettes 39a, celle-ci devant se rompre sous l'effet de la poussée exercée perpendiculairement au plan commun des ébauches 10 et 11, la partie centrale 39 se trouvant ainsi sur le fond de la matrice 60 et sous le fond de l'ébauche 11, et devent être évacuée après formation du contenant.

Ainsi, il est plus aisé de transporter et stocker les ébauches 11 puisque les panneaux 31, 32, 33 et 34 ne risquent pas de se plier accidentellement lors de ces différentes manipulations.

Lors de la formation du contenant selon le procédé décrit en regard des figures 18 à 20 et 21, la partie centrale 39 se détache des panneaux 31, 32, 33 et 34 dès que ceux-ci ont commencé à se plier de sorte que cette partie 39 tombe dans le fond de la matrice (60—70).

Afin qu'elle ne constitue pas un obstacle à la mise en place correcte, au bon niveau, du fond 40, le fond de la matrice doit être muni d'une sorte de cuvette dont la profondeur est aussi exactement que possible égale à l'épaisseur de l'ébauche en carton.

**Revendications**

1. Contenant du type comprenant une partie en carton extérieure (1) et une partie en matière synthétique (2) associées l'une à l'autre et, plus précisément, du type selon lequel la partie en carton (1) est découpée et pliée pour présenter un unique cadre en carton (30) situé dans un seul plan, des parois (31,32,33, 34, 41, 42, 43, 44) et au mois un fond (40) tandis que la partie en matière synthétique (2) est constituée d'une seule pellicule qui est appliquée sur toute la surface de la partie en carton (1) formant l'intérieur du contenant et l'extérieur du cadre (30) et qui est rendue adhérente à toute cette surface pour maintenir en bonne position relative le cadre (30), les parois et le(s) fond(s), caractérisé en ce que la partie en carton (1) est formée d'une ébauche (10—100) comportant le cadre (30) et des panneaux (31, 32, 33, 34 — 31a, 32a, 33a, 34a — 31b, 32b, 33b, 34b — 31c, 32c, 33c, 34c) solidaires des côtés intérieurs du cadre (30) et d'au moins une autre ébauche (11-110) comportant un fond (40-40a-40b-40c) et des panneaux (41, 42, 43, 44 — 41a, 42a, 43a, 44a — 41b, 42b, 43b, 44b — 41c, 42c, 43c, 44c) solidaires des côtés extérieurs du fond (40-40a-40b-40c) et en ce que les parois du contenant sont rendues continues par la juxtaposition de panneaux complémentaires à côtés obliques solidaires alternativement du cadre (30) et d'au moins un fond (40, 40a, 40b, 40c).

2. Contenant selon la revendication 1, caractérisé en ce que le fond (40), respectivement chaque fond (40a, 40b, 40c) est solidaire de pattes (45, 46, 47, 48 — 45a, 47a — 45b, 46b, 47b — 45c, 47c) pliées et appliquées contre des panneaux (31, 32, 33, 34 — 32a, 34a — 31b, 32b, 33b — 31c, 33c) solidaires du cadre (30), sur la face intérieure de ceux-ci en considérant le contenant entier.

3. Contenant selon la revendication 1, caractérisé en ce que le contenant est quadrangulaire et comprend un fond (40) octogonal dont quatre côtés opposés sont solidaires, par des lignes de pliage (50), de panneaux soit triangulaires, soit trapézoïdaux placés entre les panneaux solidaires du cadre et dont les quatre autres côtés situés entre les précédents sont solidaires par des lignes de pliage (51), de pattes (45, 46, 47 et 48) appliquées contre les panneaux (31, 32, 33 et 34) solidaires du cadre (30).

4. Contenant selon la revendication 1, caractérisé en ce que le cadre (30) comprend au moins un segment intérieur (35-36, 37) pour au moins deux panneaux opposés (33a-31b, 34a et 34b-32c) et en ce que le contenant comprend un fond (40a, 40b, 40c) solidaire de panneaux (41a à 44a, 41b à 44b, 41c à 44c) de chaque côté du segment intérieur (35-36) pour constituer les fonds et les parois de compartiments complets tenus ensemble par le cadre (30) et par le segment intérieur (35-36) de celui-ci.

5. Contenant selon la revendication 4, caractérisé en ce qu'il comprend au moins deux segments intérieurs (35 et 36) dont l'un au moins (35) s'étend transversalement d'un bord à l'autre (30a-30c) du cadre (30) et l'autre (36) d'un bord (30b) du cadre (30) au précédent segment (35), pour constituer au moins trois compartiments complets tenus ensemble par le carde (30) et par les segments intérieurs (35 et 36) de celui-ci.

6. Contenant selon la revendication 4, caractérisé en ce que le segment (35-36) a une largeur au plus égale à celle d'un côté du cadre (30).

7. Contenant selon la revendication 4, caractérisé en ce que le segment (35-36) est raccordé au cadre (30) par un gousset de renforcement (30a, 30f, 30g et 30h).

8. Contenant selon la revendication 4, caractérisé en ce que le segment (37) est constitué par la tranche de deux panneaux opposés pliés (33d-33e), lesquels sont délimités par une simple incision (38) du carton, de sorte que le segment (37) n'est pratiquement que virtuel.

9. Contenant selon la revendication 2, caractérisé en ce que les pattes (45, 46, 47, 48) appliquées contre les panneaux (31, 32, 33 et 34) solidaires du cadre (30) présentent des interruptions (49a, 49b, 49c) par lesquelles la pellicule (2) adhère à la face interne du panneau (31, 32, 33 et 34) correspondant solidaire du cadre (30) jusque dans une zone la plus proche possible du fond (40).

10. Contenant selon la revendication 9, caractérisé en ce que les interruptions (49a) sont formées par des espaces qui déterminent au moins deux pattes (45a-45b, 46a-46b,47a-47b, 48a-48b) par panneau solidaire du cadre (30).

11. Contenant selon la revendication 9, caractérisé en ce que les interruptions (49b) sont formées par au moins une échancrure prévue dans une seule patte (45, 46, 47, 48).

12. Contenant selon la revendication 9, caractérisé en ce que les interruptions (49c) sont formées par des trous qui traversent de part en part le carton constituant les pattes (45, 46, 47, 48).

13. Contenant selon la revendication 1, caractérisé en ce que le cadre (30) comporte des rebords (30e à 30l) pliés vers l'extérieur pour être sensiblement perpendiculaires au plan du cadre (30).

14. Procédé pour l'obtention d'un contenant selon la revendication 1, caractérisé en ce que l'on crée par découpage et rainage des ébauches de deux types différents qui, ainsi, présentent, celle du premier type (10), un cadre (30) et des panneaux (31, 32, 33, 34) solidaires des côtés intérieurs du cadre (30), celle du second type (11), un fond (40) et des panneaux (41, 42, 42, 44) solidaires des côtés extérieurs dudit fond (40), puis que l'on place d'abord une ébauche du premier type et ensuite, sur le dessus, au moins une ébauche du second type selon une position et une orientation relative correctes au-dessus d'une matrice (60-70) dont la forme et les dimensions intérieures correspondent à la forme et aux dimensions extérieures du contenant à obtenir, puis que l'on maintient le cadre (30) de l'ébauche du premier type (10) appliqué contre le bord de la matrice (60-70) et que l'on maintient l'ébauche ou les ébauches du second type (11) pour qu'elle(s) ne puisse(nt) pas subir de mouvement latéral et/ou de changement d'orientation, puis que l'on exerce une poussée perpendiculaire au plan commun des ébauches (10 et 11) superposées et dirigée vers le fond de la matrice (60-70) pour provoquer simultanément le pliage des panneaux (41, 42, 43 et 44) solidaires du fond (40) dans le sens opposé au précédent et la pénétration du fond (40) de l'ébauche (11) du dessus jusqu'au fond de la matrice (60-70) par l'intérieur du cadre (30) afin que tous les panneaux (31 à 34) du cadre (30) et (41 à 44) du fond (40) se placent les uns entre les autres, selon une juxtaposition bord à bord, par appui contre les parois de la matrice (60-70), puis que l'on applique, de préférence par thermo-formage, une pellicule étanche (2) en matière synthétique afin qu'elle s'étende et adhère sur le fond (40), sur tous les panneaux (31 à 34 et 41 à 44) et sur le cadre (30) et, qu'ainsi, tous ces éléments soient maintenus et forment en combinaison avec la pellicule (2), un contenant rigide et étanche susceptible de recevoir éventuellement un couvercle par solidarisation avec la pellicule (2) située sur le dessus du cadre (30).

15. Procédé selon la revendication 14, caractérisé en ce que, dans un premier temps, on exerce la poussée perpendiculaire au plan commun des ébauches (10 et 11) au moyen d'un poinçon effeçable (61) puis que, dans un second temps, on applique la pellicule (2) de préférence par thermo-formage.

16. Procédé selon la revendication 14, caractérisé en ce que l'on exerce la poussée perpendiculaire au plan commun des ébauches (10 et 11) lors du thermo-formage, par la pellicule (2) elle-même, au moyen de l'air comprimé habituel qui est appliqué sur cette pellicule (2).

17. Procédé selon la revendication 14, caractérisé en ce que l'on découpe l'ébauche (10) du premier type de telle manière que les panneaux (31, 32, 33 et 34) restent reliés entre eux en laissant subsister une partie centrale (39) à laquelle ils tiennent par de très petites languettes (39a), celles-ci devant se rompre sous l'effet de la poussée exercée perpendiculairement au plan commun des ébauches (10 et 11), la partie centrale (39) se trouvant ainsi sur le fond de la matrice (60-70) et sous le fond de l'ébauche (11) et devant être évacuée après formation du contenant.

**Patentansprüche**

1. Behälter

— mit einem äußeren Teil (1) aus Karton und einem hiermit verbundenen Teil (2) aus Kunststoff,

— wobei der Teil (1) aus Karton beschnitten und gefaltet ist und folgendes aufweist: einen in einer einzigen Ebene liegenden einstückigen Rahmen (30) aus Karton, Wände (31, 32, 33, 34, 41, 42, 43, 44) und wenigstens einen Boden (40), und

— wobei der Teil (2) aus Kunststoff aus einem einzigen Überzug besteht, der auf der gesamten die Innenseite des Behälters und die Außenseite des Rahmens (30) bildenden Oberfläche des Teils (1) aus Karton aufgebracht ist und der an dieser gesamten Oberfläche haftet, um den Rahmen (30), die Wände und den oder die Böden in der richtigen Stellung gegenüber dem Rahmen (30) zu halten,

dadurch gekennzeichnet,

— daß der Teil (1) aus Karton gebildet ist: aus einem Rohling (10-100) einschließlich des Rahmens (30) und mit den Innenseiten des Rahmens (30) verbundener Felder (31, 32, 33, 34 — 31a, 32a, 33a, 34a — 31b, 32b, 33b, 34b — 31c, 32c, 33c, 34c), und aus wenigstens einem weiteren Rohling (11-110) einschließlich eines Bodens (40-40a-40b-40c) und mit den Außenseiten des Bodens (40-40a-40b-40c) verbundener Felder (41, 42, 43, 44 — 41a, 42a, 43a, 44a — 41b, 42b, 43b, 44b — 41c, 42c, 43c, 44c), und

— daß die Wände des Behälters mit einem kontinuierlichen Übergang versehen sind durch das Nebeneinanderliegen von Ergänzungsfeldern mit schrägen Seiten, die abwechselnd mit dem Rahmen (30) und mit wenigstens einem Boden (40, 40a, 40b, 40c) verbunden sind.

2. Behälter nach Anspruch 1, dadurch gekennzeichnet, daß der Boden (40) bzw. jeder Boden (40a, 40b, 40c) mit Laschen (45, 46, 47, 48 — 45a, 47a — 45b, 46b, 47b — 45c, 47c) aufgebracht sind, und zwar bezüglich des gesamten Behälters auf deren Innenseite.

3. Behälter nach Anspruch 1, dadurch gekennzeichnet, daß der Behälter viereckig ist und einen achteckigen Boden (40) hat, dessen vier gegenüberliegende Seiten über Faltlinien (50) mit dreieckigen oder trapezförmigen und zwischen den mit dem Rahmen verbundenen Feldern angeordneten Feldern verbunden sind, und dessen vier andere zwischen den vorhergehenden Seiten befindliche Seiten über Faltlinien (51) mit Laschen (45, 46, 47 und 48) verbunden sind, die an den mit dem Rahmen (30) verbundenen Feldern (31, 32, 33 und 34) aufgebracht sind.

4. Behälter nach Anspruch 1, dadurch gekennzeichnet,

— daß der Rahmen (30) wenigstens einen inneren Abschnitt (35-36, 37) für wenigstens zwei gegenüberliegende Felder (33a-31b, 34a und 34b-32c) aufweist und

— daß der Behälter einen Boden (40a, 40b, 40c) aufweist, der mit Feldern (41a bis 44a, 41b bis 44b, 41c bis 44c) auf jeder Seite des inneren Abschnitts (35-36) verbunden ist zur Bildung der Böden und der Wände von vollständigen Abteilen, die durch den Rahmen (30) und dessen inneren Abschnitt (35-36) zusammengehalten werden.

5. Behälter nach Anspruch 4, gekennzeichnet durch wenigstens zwei innere Abschnitte (35 und 36), von denen sich wenigstens der eine (35) quer von einem Rand zum anderen (30a-30c) des Rahmens (30) und der andere (36) von einem Rand (30b) des Rahmens (30) zum vorhergehenden Abschnitt (35) erstreckt zur Bildung von wenigstens drei vollständigen Abteilen, die vom Rahmen (30) und von dessen inneren Abschnitten (35 und 36) zusammengehalten werden.

6. Behälter nach Anspruch 4, dadurch gekennzeichnet, daß die Breite des Abschnitts (35-36) höchstens gleich derjenigen einer Seite des Rahmens (30) ist.

7. Behälter nach Anspruch 4, dadurch gekennzeichnet, daß der Abschnitt (35-36) durch einen Verstärkungszwickel (30e, 30f, 30g und 30h) mit dem Rahmen (30) verbunden ist.

8. Behälter nach Anspruch 4, dadurch gekennzeichnet, daß der Abschnitt (37) durch die Schnittfläche zweier gegenüberliegender umgefalteter Felder (33d-33e) gebildet ist, die durch einen einfachen Einschnitt (38) des Kartons derart begrenzt sind, daß der Abschnitt (37) praktisch nur gedacht ist.

9. Behälter nach Anspruch 2, dadurch gekennzeichnet, daß die auf den mit dem Rahmen (30) verbundenen Feldern (31, 32, 33 und 34) aufgebrachten Laschen (45, 46, 47, 48) Unterbrechungen (49a, 49b, 49c) aufweisen, durch die der Überzug (2) an der Innenfläche des mit dem Rahmen (30) verbundenen entsprechenden Felds (31, 32, 33, 34) bis in eine dem Boden (40) möglichst nahegelegene Zone haftet.

10. Behälter nach Anspruch 9, dadurch gekennzeichnet, daß die Unterbrechungen (49a) durch Zwischenräume gebildet sind, die wenigstens zwei Laschen (45a-45b, 46a-46b, 47a-47b, 48a-48b) je mit dem Rahmen (30) verbundenem Feld festlegen.

11. Behälter nach Anspruch 9, dadurch gekennzeichnet, daß die Unterbrechungen (49b) durch wenigstens einen bogenförmigen Ausschnitt in einer einzigen Lasche (45, 46, 47, 48) gebildet sind.

12. Behälter nach Anspruch 9, dadurch gekennzeichnet, daß die Unterbrechungen (49c) durch Löcher gebildet sind, die den die Laschen (45, 46, 47, 48) bildenden Karton vollständig durchqueren.

13. Behälter nach Anspruch 1, dadurch gekennzeichnet, daß der Rahmen (30) nach außen gefaltete Ränder (30e bis 30l) aufweist, die zur Ebene des Rahmens (30) im wesentlichen senkrecht sind.

14. Verfahren zum Herstellen eines Behälters nach Anspruch 1, gekennzeichnet

— durch Herstellen von zwei unterschiedlichen Arten von Rohlingen durch Ausschneiden und Falzen, von denen diejenigen der ersten Art (10) aufweisen: einen Rahmen (30) und mit den Innenseiten des Rahmens (30) verbundene Felder (31, 32, 33, 34), und von denen diejenigen der zweiten Art (11) aufweisen: einen Boden (40) und mit den Außenseiten des Bodens (40) verbundene Felder (41, 42, 43, 44),
— durch Anbringen von zunächst einem Rohling der ersten Art und anschließend wenigstens einem Rohling der zweiten Art auf der Oberseite in einen richtige Stellung und Ausrichtung über einer Matrize (60-70), deren innere Form und Abmessungen der äußeren Form und Abmessungen des herzustellenden Behälters entsprechen,
— durch Halten des Rahmens (30) des Rohlings der ersten Art (10) in Anlage am Rand der Matrize (60-70) und Halten des Rohlings (der Rohlinge) der zweiten Art (11), damit er (sie) keine seitliche Bewegung und/oder Richtungsänderung ausführen kann (können),
— durch Ausüben eines zur gemeinsamen Ebene der übereinanderliegenden Rohlinge (10 und 11) senkrechten und zum Boden der Matrize (60-70) gerichteten Schubs zum gleichzeitigen Bewirken des Faltens der mit dem Boden (40) verbundenen Felder (41, 42, 43 und 44) entgegengesetzt zur vorhergehenden Richtung und des Eindringens des Bodens (40) des Rohlings (11) von oben bis zum Boden der Matrize (60-70) durch den Innenraum des Rahmens (30), damit sich alle Felder (31 bis 34, bzw. 41 bis 44) des Rahmens (30) und des Bodens (40) zueinander längs einer Kante an Kante erfordernden Nebeneinanderlegung durch Anlage an den Wänden der Matrize (60-70) placieren,
— durch vorzugsweise mittels Warmformung erfolgendes Aufbringen eines dichten Überzugs (2) aus Kunststoff, damit sich dieser auf dem Boden (40) ausbreitet und daran haftet, auf allen Feldern (31 bis 34 und 41 bis 44) und auf dem Rahmen (30),
— wodurch alle diese Elemente gehalten werden und in Kombination mit dem Überzug (2) einen steifen und dichten Behälter bilden, der gegebenenfalls einen Deckel aufnehmen kann durch Verbinden mit dem Überzug (2) auf der Oberseite des Rahmens (30).

15. Verfahren nach Anspruch 14, gekennzeichnet

— durch zu einer ersten Zeit erfolgendes Ausüben des Schubs senkrecht zur gemeinsamen Ebene der Rohlinge (10 und 11) mittels eines ausfahrbaren Eindringkörpers (61) und
— durch zu einer zweiten Zeit erfolgendes Aufbringen des Überzugs (2) vorzugsweise durch Warmformen.

16. Verfahren nach Anspruch 14, gekennzeichnet durch Ausüben des Schubs senkrecht zur gemeinsamen Ebene der Rohlinge (10 und 11) während des Warmformens durch den Überzug (2) selbst mittels auf dem Überzug (2) wirkender üblicher Druckluft.

17. Verfahren nach Anspruch 14, gekennzeichnet

— durch Beschneiden des Rohlings (10) der ersten Bauart derart, daß die Felder (31, 32, 33 und 34) untereinander verbunden bleiben und einen mittleren Teil (39) bestehen lassen, an dem sie durch sehr kleine Streifen (39a) halten, die durch einen senkrecht zur gemeinsamen Ebene der Rohlinge (10 und 11) ausgeübten Schub brechen sollen,
— wobei der mittlere Teil (39) sich somit über dem Boden der Matrize (60-70) und über dem Boden des Rohlings (11) befindet und nach der Herstellung des Behälters entfernt werden soll.

## Claims

1. Container of the kind comprising an outer cardbord section (1) and a synthetic material section (2) which are joined together, and more specifically of the kind in which the carbon part is cut out and folded to form a single carton frame (30) situated in one plane only, walls (31, 32, 33, 34, 41, 42, 43, 44) and at least one base (40), whereas the synthetic material part (2) comprises a single film applies throughout the surface of the carton part (1) forming the inside of the container and the outside of the frame (30) and which is made to adhere throughout this surface for retention in satisfactory position on the frame (30), the wall(s) and base(s), characerised in that the carton part (1) comprises a blank (10-100) comprising the frame (30) and panels (31, 32, 33, 34 — 31a, 32a, 33a, 34a — 31b, 32b, 33b, 34b — 31c, 32c, 33c, 34c) in unit with the inner side of the frame (30) and at least one other blank (11-110) comprising a base (40-40a-40b-40c) and panels (41, 42, 43, 44 — 41a, 42a, 43a, 44a — 41b, 42b, 43b, 44b — 41c, 42c, 43c, 44c) in unit with the outer sides of the base (40-40a-40b-40c) and in that the wall of the container are made continuous by juxtaposing of complementary obliqueside panels in unit — alternately — with the frame (30) and with at least one base (40, 40a, 40b, 40c).

2. Container according to claim 1, characerised in that the base (40), or each base (40a, 40b, 40c) is integral with lugs (45, 46, 47, 48 — 45a, 47a — 45b, 46b, 47b — 45c, 47c) folded and applied against panels (31, 32, 33, 34 — 32a, 34a — 31b, 32b, 33b — 31c, 33c) integral with the frame (30) and on the inner surface thereof of considering the container as a whole.

3. Container according to claim 1, characerised in that the container is quadrangular and comprises an octagonal base (40) whereof four opposed sides are integral via fold lines (50) with either triangular or trapezoidal panels situated between the frame panels which are integral and whereof the four other sides situated between the former are integral via fold lines (51) with lugs (45, 46, 47 and 48) applied against the panels (31, 32, 33 und 34) in unit with the frame (30).

4. Container according to claim 1, characterised in that the frame (30) comprises at least one internal segment (35-36, 37) for at least two opposed panels (33a-31b, 34a and 34b-32c) and in that the container has a base (40a, 40b, 40c) integral with panels (41a to 44a, 41b to 44b, 41c to 44c) at each side of the internal segment (35-36) to form the bases and walls of complete compartments held together by the frame (30) and by the internal segment (35-36) thereof.

5. Container according to claim 4, characterised in that is has at least two inner segments (35 and 36) of which at least one (35) extends transversely from one edge to the other (30a-30c) of the frame (30) and the other (36) from one edge (30b) of the frame (30) to the preceding segment (35) to form at least three complete compartments held together by the frame (30) and by its inner segments (35 and 36).

6. Container according to claim 4, characterised in that the segment (35-36) has a width at least equal to that of a side of the frame (30).

7. Container according to claim 4, characterised in that the segment (35-36) is joined to the frame (30) via a reinforcing »gusset« (30e, 30f, 30g and 30h).

8. Container according to claim 4, characterised in that the segment (37) is formed by the edge of two folded opposed panels (33d-33e) which are delimited by a simple incision (38) of the carton, so that the segment (37) is practically no more than virtual.

9. Container according to claim 2, characterised in that the lugs (45, 46, 47, 48) applied against the panels (31, 32, 33 and 34) in unit with the frame (30) contain interruptions (49a, 49b, 49c) through which the film (2) adheres to the inner surface of the corresponding panel (31, 32, 33 and 34) in unit with the frame (30) as far as into the area closest to the base (40).

10. Container according to claim 9, characterised in that the interruptions (49a) are formed by spaces which define at least two lugs (45a-45b, 46a-46b, 47a-47b, 48a-48b) per panel in unit with the frame (30).

11. Container according to claim 9, characterised in that the interruptions (49b) are formed by at least one notch provided in a single lug (45, 46, 47, 48).

12. Container according to claim 9, characterised in that the interruptions (49c) are formed by holes passing through the carton forming the lugs (45, 46, 47, 48) from one side to the other.

13. Container according to claim 1, characterised in that the frame (30) has outwardly bent over flanges (30e to 30l) arranged to be substantially at right angles to the plane of the frame (30).

14. Method for producing a container according to claim 1, characterised in that blanks of two different kinds are produced by cutting out and creasing, of which that of a first kind (10) has a frame (30) and panels (31, 32, 33, 34) in unit with the inner sides of the frame (30), and that of the second kind (11) has a base (40) and panels (41, 42, 43, 44) in unit with the outer sides of the said base (40), whereupon a blank of the first kind is first arranged and then over the former at least one blank of the second kind in a correct position and directional setting above a pattern (60-70) whereof the shape and internal dimensions correspond to the outer shape and dimensions of the container which is to be produced, after which the frame (30) of the blank of the first kind (10) is held applied against the edge of the pattern (60-70) and that the blank or blanks of the second kind (11) are secured or against lateral displacement or change of directional setting, whereupon a thrust is exerted at right angles to the common plane of the superposed blanks (10 and 11) and directed towards the base of the pattern (60-70) for simultaneously causing the panels (41, 42, 43 and 44) in unit with the base (40) to be folded in opposite direction and the penetration of the base (40) of the blank (11) from the top to the base of the pattern (60-70) through the inside of the frame (30) so that all the panels (31 to 34) of the frame (30) and (41 to 44) of the base (40) are situated one between the other in an edge to edge joint by bearing against the walls of the pattern (60-70), after which a hermetic skin (2) of synthetic material is applied preferably by heat-moulding so that it may extend over and adhere to the base (40), to all the panels (31 to 34 and 41 to 44) and on the frame (30), and that all these elements are thus secured and in combination with the film (2) form a rigid and hermetic container capable of being given a lid if appropriate, by joining to the film (2) situated on the top of the frame (30).

15. Method according to claim 14, characterised in that during a first stage, the thrust at right angles to the common plane of the blanks (10 and 11) is exerted by means of a withdrawable plunger or die (61) and that in a second stage, the film (2) is preferably applied by heat-moulding.

16. Method according to claim 14, characterised in that the thrust at right angles to the common plane of the blanks (10 and 11) is exerted during the heat-moulding operation via the film (2) itself, by means of conventional compressed air which is applied to this film (2).

17. Method according to claim 14, characterised in that the blank (10) of the first kind is cut out in a manner such that the panels (31, 32, 33 and 34) remain interconnected whilst leaving in being a central part (39) to which they are connected via very small strips (39a), these being scheduled to tear under the action of the thrust exerted at right angles to the common plane of the blanks (10 and 11), the central part (39) thus being situated on the bottom of the pattern (60-70) and below the base of the blank (11) and due to be extracted after the forming of the container.

**0 052 021**

**Fig.1**

**Fig.2**

**Fig.3**

**Fig.4**

17

Fig. 5

Fig. 6

Fig. 7

Fig. 8

Fig. 9

Fig. 10

**Fig.11**

**Fig.12**

**Fig.13**

**Fig. 14**

**Fig.15**

**Fig. 16**

**Fig 17**

**Fig 18**

**Fig 19**

**Fig 20**

**Fig. 21**

**Fig. 22**